Europäisches Patentamt

European Patent Office

Office européen des brevets

(11) Publication number: **0 242 942 B1**

# EUROPEAN PATENT SPECIFICATION

(45) Date of publication of patent specification: **29.01.92**  (51) Int. Cl.5: **G11B 7/24**, G11B 7/26

(21) Application number: **87301046.6**

(22) Date of filing: **05.02.87**

(54) **Optical recording medium and process for producing the same.**

(30) Priority: **24.04.86 JP 95264/86**
**18.06.86 JP 142167/86**
**18.09.86 JP 220833/86**
**18.12.86 JP 302607/86**
**22.12.86 JP 306073/86**
**23.12.86 JP 307120/86**
**09.01.87 JP 2966/87**
**23.01.87 JP 13650/87**

(43) Date of publication of application:
**28.10.87 Bulletin 87/44**

(45) Publication of the grant of the patent:
**29.01.92 Bulletin 92/05**

(84) Designated Contracting States:
**DE FR GB IT NL**

(56) References cited:
**DE-A- 2 718 157**

**PHILIPS TECHNICAL REVIEW, vol. 41, no. 11/12, 1983/84, pages 313-324, Eindhoven, NL; L. VRIENS et al.: "Digital optical recording with tellurium alloys"**

(73) Proprietor: **MITSUBISHI KASEI CORPORATION**
**5-2, Marunouchi 2-chome Chiyoda-ku**
**Tokyo 100(JP)**

(72) Inventor: **Yoshitomi, Toshihiko**
**4-7-1103 Wakabadai, Asahi-ku**
**Yokohama-shi Kanagawa-ken(JP)**
Inventor: **Kobayashi, Yoshimitsu**
**4-20-6 Nishiogi-Kita Suginami-ku**
**Tokyo(JP)**
Inventor: **Kisaka, Yoshiyuki**
**27-1-309 Ibukino, Midori-ku**
**Yokohama-shi Kanagawa-ken(JP)**
Inventor: **Yoshida, Hidemi**
**6-20-22 Satsukigaoka, Midori-ku**
**Yokohama-shi Kanagawa-ken(JP)**
Inventor: **Horie, Michikazu**
**Aoba-Ryo, 5-1 Tsutsujigaoka, Midori-ku**
**Yokohama-shi Kanagawa-ken(JP)**

PATENT ABSTRACTS OF JAPAN, vol. 8, no. 217 (E-270)[1654], 4th October 1984; & JP - A - 59 103 314 (SEIKO DENSHI KOGYO K.K.) 14-06-1984

JOURNAL OF APPLID PHYSICS, vol. 50, November 1979, pages 6881-6886, Tokyo, JP; M. TERAO et al.: "Chalcogenide thin films for laser-beam recordings by thermal creation of holes"

Inventor: **Tamura, Takanori Mitsubischi Kasey K.K.K**
**Kamononiya Ryo, 2-20-2 Minami-Kamonomiya,**
**Odawara-shi, Kanagawa-Ken(JP)**
Inventor: **Ohgaki, Mitsuaki Mitsubischi Kasey K.k.K**
**Kamononiya Ryo, 2-20-2 Minami-Kamononiya**
**Odawara-shi, Kanagawa-Ken(JP)**

74 Representative: **Woods, Geoffrey Corlett et al**
**J.A. KEMP & CO. 14 South Square Gray's Inn**
**London WC1R 5EU(GB)**

## Description

The present invention relates to an optical recording medium and to a process for producing the same. In more detail, the present invention relates to an optical recording medium on which information can be recorded by irradiating a laser beam on a recording layer to cause local heating to form an ablative hole or a depression in the heated part, thereby recording information, and to a reliable process for producing the optical recording medium.

As an optical recording medium on which information can be recorded by irradiating a laser beam on a thin recording layer formed on a substrate, thereby forming a hole, a depression or a protuberance thereon, it has been hitherto known to use thin Te films. Since Te has a large light absorption coefficient, melts at a low temperature and has low thermal conductivity, it has a high recording sensitivity in the above-mentioned method. However, there is a problem that Te films tend to oxidize rapidly in air; the degradation of the light absorption efficiency caused by oxidation results in the degradation of recording sensitivity.

The degradation resistance of Te films has been improved by using an alloy containing Se instead of Te, using lower oxides of Te or using an organic polymer layer in which Te is dispersed [for instance refer to JP-A-53-3ll04(l978), JP-A-58-54338(l983) and JP-A-57-98394(l982)].

Although the above-mentioned recording medium can be produced by a vacuum evaporation method or an ion-plating method, a sputtering method is preferably adopted because of the favorable controlability of the deposition of the films.

As a result of the present inventors' studies on films produced by sputtering of Te or Te based materials using pure argon gas, it was found by X-ray diffraction, electron diffraction and transmission electron microscopy that large crystal grains of a size of from several thousand Å to several $\mu$m exist over the whole area of these films, that the flatness, the shape of the pits and the recording sensitivity are poor and that a large amount of noise is generated in the readout signal. In addition it has been found that the polycrystalline structure of the deposited films is unstable. Accordingly, since the reflectance increases to nearly l.3 times as much as the initial reflectance within 24 hours in an accelerated test at a temperature of 65°C and a relative humidity of 80%, the stability of such a recording medium over time is extremely poor.

To solve the above-mentioned problem, there is a method in which the recording layer has a non-crystalline or microcrystalline structure and the temperature at which the above-mentioned micro-structures are transformed into the polycrystalline structure of larger grain size, that is the crystallization temperature, is increased, thereby stabilizing the micro-structure of the layer at room temperature. For example a thin recording layer of a Te based alloy containing Ge, Pb or Sn may be used [refer to JP-A-59-35356(l984)].

Furthermore, it has been proposed that the same effect as described above can be obtained by dispersing Te in an organic substance by reactive sputtering [refer to JP-A-57-l65292(l982) and JP-A-57-78394(l982)].

However, even in the medium produced by the above-mentioned process, change in reflectance (transmission) of the medium over time occurs with change in the micro-structure and degradation of the medium by long-term irradiation of the readout laser light. Thus it has been difficult to maintain the micro-structure of the recording layer in a stable state over a long period when using a Te based alloy film as the recording layer.

On the other hand, in an optical recording medium wherein ablative holes or depressions are formed as the pits for recording the information, not only the recording layer but also the state of the interface between the recording layer and the substrate or the underlayer is important as these are primary factors which determine the laser beam power required to form the pit, namely the recording sensitivity.

In order to form the pits in the thin layer of the recording medium comprising the above-mentioned substrate and the thin recording layer by the laser beam, it is necessary that the material of the recording layer which is melted locally by the laser heating is removed from the substrate while overcoming the adhesion of the film to the substrate. To reduce the adhesion and to improve the recording sensitivity, an underlayer comprising a thin layer of a fluorocarbon polymer has been provided between the recording layer and the substrate [JP-A-59-90246(l984)]. The factors contributing to the adhesion of the films to the substrate include the surface tension of the recording layer and the substrates, the molecular weight and the degree of crosslinking in the surface layer of the substrate. As the adhesion of the recording layer to the substrate is less, the pit can be formed in a shorter pulse width with less laser beam power. This improves the recording sensitivity, and therefore high-speed recording and the use of a cheap semiconductor laser diode of low output power have become possible. However, in order to perform higher quality recording, it is not only required that the sensitivity is improved but also that the recorded pits are uniform and have sharp and well-defined edges.

It is also required that the storage capacity of the optical recording medium is large, namely that high density recording is possible. In order to improve the storage capacity of the optical recording medium of the perforating type, the minimum size of the pit must be as small as possible. In the case where, due to the large heat conductivity of the recording layer, the region to be melted and removed by irradiation of the laser beam becomes too large and in the case where, due to the low adhesion of the recording layer to the underlayer, the amount of the substance to be removed becomes too large, the size of the pit is enlarged. In such a case high density storage is impossible.

Furthermore, in the above-mentioned media, since the size of the pit changes with a slight change of the laser beam power, stable and accurate recording of the digital signal is difficult.

When a thin film of a fluorocarbon polymer is provided as the underlayer, it is relatively easy to improve the recording sensitivity. However, there still remains problems concerning the above-mentioned shape and size of the pits. In JP-A-59-90246(1984), a method for solving the above-mentioned problem concerning the pit shape is not given.

Furthermore, in addition to the problems concerning the pit shape, in the case of recording with a laser beam having a short pulse width or in the case where the disk is rotated at a constant high angular velocity, particularly in the outer region of the disk the energy density of the laser beam focused on a unit area of the surface of the optical recording medium is small. Thus the laser beam output necessary to form a pit is larger. Therefore the requirement for improvement of the sensitivity of the optical recording medium is more severe in the outer region than in the inner region of the disk.

In order to fulfil the above-mentioned requirements, the combination of the material of the recording layer and the material of the substrate or the underlayer becomes an extremely important factor. Namely, in order to shorten the minimum length of the pit, it is desirable that the adhesion is larger. On the other hand, in order to improve the sensitivity, it is desirable that the adhesion is smaller. In other words, two mutually contradictary requirements must be satisfied. In order to overcome this, for instance, an organic compound may be used which decomposes and/or sublimes at a low temperature while still having a high adhesion (e.g. nitrocellulose, guanine and pigments such as phthalocyanine) (refer to the Proceeding of XXXII Combined Recture Meeting of Applied Physics, p. ll5, Spring l985). However, sufficient sensitivity and stability of the optical recording medium are not necessarily obtained. Furthermore, the physical properties of these organic compounds (decomposition temperature, sublimation temperature and adhesion) are specific to each of them, and it is impossible to optimize the properties of these compounds easily and flexibly depending on the combination of various recording layers and the driving system.

Moreover, the above-mentioned sublimative pigments cannot be formed into a thin layer by sputtering or plasma polymerization. Accordingly it is not possible to use a consistent dry process to form the recording layer with sputtering.

Philips Technical Review, 41, No 11/12, 1983/4, pp 313-324 discloses an optical recording medium comprising a recording layer which may, for example, comprise a tellurium alloy which contains selenium.

The present invention provides an optical recording medium on which information can be recorded by irradiation with a laser beam, which medium comprises

(a) a substrate and

(b) a recording which contains, based on the composition of the layer, from 35 to 94.9 atomic% of Te, from 5 to 25 atomic % of Se and from 0.l to 40 atomic% of F.

The recording layer may, for example, be produced by reactive sputtering, the Se being derived from selenium fluoride and a sputtering target comprising a Te-Se-alloy or by reactive sputtering using a target of Te.

The present invention also provides a process for producing an optical recording medium, which process comprises carrying out reactive sputtering in a gaseous mixture of a selenium fluoride gas and argon gas while using a target of Te or an alloy containing Te and Se as a target material so as to form a recording layer containing, based on the composition of the layer, from 35 to 94.9 atomic% of Te, from 5 to 25 atomic% of Se and from 0.l to 40 atomic% of F on a substrate.

The optical recording medium of the present invention has excellent recording performance such as high recording sensitivity, good shape of the pits, smoothness of the surface of the recording layer, uniformity of the microstructure of the recording layer, good archival stability, and low readout noise since the recording layer is non-crystalline or has a microcrystalline structure and since, preferably, an underlayer comprising a fluorocarbon polymer is disposed between the recording layer and the substrate. The process of the present invention produces an optical recording medium with good reproducibility.

Fig. l shows a longitudinal cross sectional view of an example of an optical recording media according to the present invention, Fig. 2 shows an apparatus for producing the optical recording medium according to the present invention; Fig. 3 shows how the transmission of the recording medium obtained in Example 4 depends on the temperature; Fig. 4 shows the dependency of the C/N ratio of the recording medium obtained in Example ll on the recording laser power; and Fig. 5 shows the dependency of the C/N ratio of the recording medium obtained in Example l2 on the recording laser power.

The substrate of the recording medium may be, for example, a plastic material such as an acrylic resin or polycarbonate resin, a metal such as aluminium or glass, or a material made by applying a thermosetting resin or photosetting resin on an above-mentioned substrate. A plastic substrate has the advantages of being cheap and easy to process and has excellent optical properties.

In an optical signal readout system wherein a laser beam is irradiated through the transparent substrate of a recording medium and the reflected light from the recording medium is detected to read out the signals, the change in birefringence of the substrate over time is unfavorable. The birefringence of the substrate becomes the main factor in the fluctuation of the readout light intensity.

In the recording medium according to the present invention, a cheap plastic substrate may be used since the birefringence change thereof is small. This substrate is stabilized by annealing a recording medium of high quality, and high cost-performance can be offered.

According to the process of the present invention, the recording layer is deposited onto the substrate by reactive sputtering. In this method a glow discharge is provided in a vacuum chamber into which a gaseous mixture comprising argon gas and a selenium fluoride gas has been introduced, using the target material comprising Te or Te and Se.

The thickness of the deposited recording layer is, for example, from 15 to 100 nm (l50 to l000 Å), preferably from 20 to 100 nm (200 to l000 Å. When the thickness is less than 15 nm (l50 Å), a completely satisfactory readout signal cannot be obtained since the reflection from the recording layer is low. When the thickness is more than 100 nm (l000 Å), the recording sensitivity of the optical recording medium is poor.

Te, which is a component of the recording layer, is, in the process of the present invention, derived from the target material, and F, which is also a component thereof, is derived from the fluoride gas. Se, which is again also a component thereof, is derived from the target material containing Te and Se or the selenium fluoride gas.

Conventional RF sputtering or DC sputtering methods can be used.

It is necessary to maintain the temperature of the substrate at a temperature of from room temperature to a temperature sufficiently less than the softening point of the substrate during deposition, for instance at a temperature of from 40 to 50°C in the case of a polycarbonate substrate. This temperature is easily achieved even without cooling the substrate by conventional magnetron-sputtering.

As the target material, Te alone, an alloy comprising Te and Se, and an alloy comprising Te and Se as the main component, for example further containing Pb, Sb, Sn, In or Ge, may be exemplified.

In the case where a target made of Te alone is used, the surface of the target is oxidized even if the target is preserved in a vacuum. As a result the sputtering rate of Te fluctuates and an abnormal electric discharge is caused.

To remove the oxidized layer from the surface of the target, pre-sputtering by an inert gas is generally carried out. However, since the electric discharge conditions at the time of the pre-sputtering and the duration thereof depend on the oxidized state of the surface of the target, it is necessary to carry out the pre-sputtering carefully.

By using an alloy containing Te and Se as the target, the fluctuation of the sputtering rate owing to the oxidation of the surface of the target can be prevented. This prevents fluctuation of the composition of the deposited film.

The alloy target containing Te and Se is easily prepared by an ordinary sintering method or melting method.

The deposition of the recording layer is carried out in a conventional radio frequency or direct current discharge sputtering apparatus using the above-mentioned target. The effect of incorporating Se in the Te recording medium is to prevent degradation of the recording medium itself by oxidation. To attain this, when using the alloy target the content of Se in the target is preferably from 5 to 30 atomic%. However, since the surface tension of the recording medium at the time of melting is reduced by the presence of Se, it is not favorable to make the target contain over 30 atomic% Se when the pits are to be formed by local irradiation by a laser beam and using the surface tension of the film material. Particularly, when the reduction of the surface tension of the recording layer becomes a problem, the amount of Se in the target is preferably from l to 5 atomic%. Even with this Se content oxidation of the surface of the target is prevented.

In order to make the recording medium contain an element in addition to Te, Se and F, the objective element can, for example, be added into the target of Te alone or the alloy target containing Te and Se. By addition of, for example, Pb, Sb, Sn, In or Ge into the target containing Te and Se, the properties of the recording medium can be controlled.

$Se_2F_2$, $SeF_4$ and $SeF_6$ are examples of the selenium fluoride gas. $SeF_6$ is generally used. The amount of the selenium fluoride gas in the gaseous mixture is generally from 0.l to 50% by volume.

From 35 to 94.9 atomic% of Te, from 5 to 25 atomic% of Se and from 0.l to 40 atomic% of F are contained in the deposited recording layer. When a fourth component is contained in the deposited recording layer, the amount of such a component is preferably from l to 20 atomic%.

If the Se is contained in the layer in an amount of less than 5 atomic%, the oxidation resistance of the layer and the stability over time are poor. If the content of Se is more than 25 atomic%, the energy which is necessary for forming the holes is greater, i.e. the recording sensitivity is poor.

If the F content in the deposited layer is less than 0.latomic%, the films do not have a non-crystalline structure. If the F content is more than 40 atomic%, the substrate is apt to be damaged, and moreover the recording sensitivity is poor.

It has been confirmed by X-ray and electron beam diffraction that the recording layer film has a uniform non-crystalline structure. This is in contrast to the polycrystalline structure of a deposited layer prepared by a simple vacuum evaporation method or a sputtering method using only argon gas. The reason why the deposited film has a non-crystalline structure is not clear. It could be because the molecules of the reactive gas contain fluorine atom(s), fluoride ions and fluorine radicals so that Se and Te fluorides are formed in the glow discharge plasma. These fluorides could impinge onto the substrate together with the Te and Se atoms causing etching of the glowing surface of the films, resulting in the prevention of growth of large grains.

Furthermore, the etching of the surface of the substrate slightly by the fluoride ions or fluorine radicals also uniformalizes the adhesion between the substrate and the deposited film.

Since in the above-mentioned non-crystalline films the grains and grain boundaries are almost negligibly small, when these films are used as a recording medium, it is possible to make the recording sensitivity and the shape of the pits uniform. Moreover it is possible to reduce the readout noise to a low level since there is no fluctuation of the readout light during the reading-out of signals by the laser beam. Accordingly, a high C/N ratio (carrier to noise ratio) is obtained.

In addition, due to the fact that the deposited layer contains Se as well as Te, oxidation-resistance, which cannot be obtained by Te alone, can be obtained. The reflectivity of the above-mentioned recording medium does not change at all even after being exposed, in an accelerated test, for 30 days at a temperature of 70°C and at a relative humidity of 85%.

By heating the above-mentioned recording layer to a suitable temperature, that is by subjecting the recording medium to annealing, the micro-structure of the film is changed. As a result it is possible to increase the stability of the crystals, the recording sensitivity and the pit form over time.

The recording medium before annealing has a uniform non-crystalline structure. Even after the annealing it has a stable polycrystalline structure having grains of less than 100 nm (l000 Å) diameter. It is possible to make the grain size to not above several tens nm (several hundred Å). The recording medium with this grain size does not have disadvantages such as an occurrence of noise in the readout signal and a disorder of the shape of the pits.

In addition, the non-crystalline structure as mentioned above also refers to a micro-structure having an X-ray diffraction pattern in which no clear crystal line peak can be observed, and also refers to a structure in which so-called micro-crystalline grains having a diameter of several nm (several tens Å) are present. A polycrystalline structure having a grain size of less than 100 nm (l000 Å) means all micro-structures in which the largest grain size is less than 100 nm (l000 Å), and therefore includes the non-crystalline structure, the microcrystalline structure, the polycrystalline structure and a hetero-structure (a mixture of the above-mentioned three structures). Such a structure can be confirmed accurately by observing the transmission image, the diffraction pattern or the lattice image of the deposited films with transmission electron-microscopy.

The annealing may be carried out in a vacuum, in dried air or in a nitrogen atmosphere. However, in order to maintain the atmosphere in a uniform state, dried air or a nitrogen atmosphere is preferred. The annealing is carried out in the atmosphere at a temperature of from 60°C to less than l30°C, preferably from 60°C to l00°C and more preferably from 60°C to 90°C. When using a plastic substrate it is preferred that the temperature of the annealing is sufficiently less than the softening point of the plastic substrate. For instance a temperature of less than 90°C is preferred to annealing a polycarbonate resin substrate.

It is necessary to carry out the annealing until the micro-structure in the film undergoes no further change. About 10 minutes is sufficient. However, in order to remove a garlic-like odour, which is specific to a Te based recording medium, it is more effective to carry out the annealing for about one hour.

Although the annealing may be carried out immediately subsequent to finishing the sputtering at a higher temperature than that used during the deposition of the film, the treated substrate is usually taken out of the sputtering vacuum system and cooled to room temperature before being subjected to the annealing.

Although the fluorine content in the deposited film is decreased by the annealing, in order to obtain the above-mentioned stable micro-structure after the annealing, since fluorine atoms effectively terminate the free bond of Te, the fluorine content in the film is generally from 0.l to 30, preferably from 1 to 20, atomic% after the annealing. There is a tendency for the crystal grain diameter to be larger than 100 nm (l000 Å) after the annealing when the fluorine content is below 0.l atomic%. Moreover, when the fluorine content is more than 30 atomic%, the pits have serious irregularities; accordingly such a high content is not preferred. When the fluorine content is more than 20 atomic%, there is a tendency for the crystallization temperature to be raised.

It is preferred that the micro-structure in the above-mentioned recording layer is sufficiently stabilized by annealing at a temperature of from not less than 60°C to less than l00°C, particularly at a temperature of not more than 90°C. By controlling the mixing ratio of the selenium fluoride gas and argon gas, it is possible to control the amorphous-to-crystalline transition temperature of the recording medium according to the present invention within the above-mentioned range.

It is possible to stabilize the birefringence of the above-mentioned plastic substrate by carrying out the annealing. Particularly, in the case of using a plastic substrate in which the birefringence in the perpendicular direction to the surface of the substrate after the annealing is not more than 30 nm, the noise due to the fluctuation of the readout signals caused by the birefringence when detecting the readout light through the substrate is reduced to a negligible amount.

Although in the recording medium according to the present invention the recording layer has been deposited directly on the substrate as described above, it is also possible to provide an underlayer between the substrate and the recording layer, for example to improve the recording sensitivity and the shape of pits. Furthermore it is possible to provide a protective layer on the recording medium to protect the recording medium. It is particularly effective to use an underlayer made of a fluorocarbon polymer. Various types of fluorocarbon polymer can be used depending on the the performance required of the optical recording medium obtained.

A dry-process in a vacuum is favorable for producing the underlayer from the viewpoint of uniformity of the layer, decrease of pin-holes and the constitution of in-line process with the recording layer. A plasma polymerized film of a fluorocarbon, a sputtered film of a polyfluorocarbon and a vacuum evaporated film of a polyfluorocarbon can, for example, be used. Examples of the fluorocarbon are a perfluoroalkane such as $CF_4$ or $C_2F_6$ and a perfluoroalkene such as $CF_3CFCF_2$, perfluorohexane and perfluorobenzene. Any fluorocarbon may be used even if it is a gas or liquid at normal temperatures, provided that the fluorocarbon has an adequately high vapour pressure, glow discharge can be sustained in a vacuum chamber after filling the chamber with the fluorocarbon vapour at a pressure of the order of higher than 0.13 Pa ($10^{-3}$ Torr) and the fluorocarbon has a high degree of fluorine substitution. The plasma polymerized fluorocarbon film can be formed by using the above-mentioned fluorocarbon as the monomer and using a capacitively coupled electric discharge or inductively coupled electric discharge. As another method the films may be deposited by sputtering of, for example, polytetrafluoroethylene, a copolymer of tetrafluoroethylene and hexafluoropropylene or a copolymer of tetrafluoroethylene and perfluoroalkoxyethylene, in a gasous phase such as argon gas or a gaseous mixture of an inert gas and the above-mentioned monomer.

It is also possible to carry out vacuum evaporation of a polyfluorocarbon. However, the deposition rate of the film is generally slower than that of the above-mentioned two methods.

The thickness of the fluorocarbon polymer underlayer is generally from 10 to 100 nm (100 to 1000 Å).

The fluorocarbon polymer underlayer influences, for example, the shape of the pits, the presence or absence of remnants in the pits and the recording sensitivity of the recording medium, depending on the condition of the interface between the underlayer and the recording layer. Accordingly, exact evaluation of the composition and the structure of the underlayer surface of the fluorocarbon polymer, and the control thereof during manufacturing, are important.

An example of an evaluating method is the ESCA method (electron spectroscopy for chemical analysis).

According to the ESCA method, the kinds of elements, their composition and the state of chemical bonding in the vicinity of the surface of the specimen can be analyzed from the energy spectrum of photoelectrons emitted by the atoms in the compounds of the specimen by irradiation with soft X-rays.

In the present invention, the spectrum of the fluorine IS orbital($F_{IS}$) and the spectrum of the carbon IS orbital($C_{IS}$) on the surface of a fluorocarbon polymer thin film before forming the recording layer thereon were determined using an ESCA spectrometer "XSAM-800" made by the SPECTROS Company. The $F_{IS}$ spectrum consists of a single peak having a center in the vicinity of 688 eV binding energy, and the $C_{IS}$ spectrum consists of several peaks having centers in the region of from 285 to 294 eV binding energy. The

-CF$_3$ and >CF$_2$ peaks can be discriminated particularly clearly from the other binding states, and may be identified by comparison with reference chemical shifts according to the method disclosed in various literature (e.g. D.T. Clark and D. Shuttleworth, J. Poly. Sci., 18(80) page 27; and K. Nakajima, A.T. Bell and M. Shen, J. Appl. Poly. Sci., 23(79) page 2627). The ratio of each integral peak area intensity to the whole integral intensity of C$_{IS}$ is calculated to obtain the values "-CF$_3$/C" and ">CF$_2$/C"., "-CF$_3$/C" is the ratio of the number of carbon atoms forming -CF$_3$ groups to the total number of carbon atoms and ">CF$_2$/C" is the ratio of the number of carbon atoms forming the >CF$_2$ groups to the total number of carbon atoms. The ratio of the number of fluorine atoms to the number of carbon atoms can be calculated from the peak area ratio of C$_{IS}$ to F$_{IS}$.

The relationship between the composition and the structure of the fluorocarbon polymer underlayer obtained by the above-mentioned method and the specific properties of the optical recording medium, and furthermore the method of controlling the composition and the structure thereof are explained as follows. It is easy to select the most suitable composition and structure of the fluorocarbon polymer underlayer along with each type of recording layer containing Te, Se and F.

The relationship between the composition of the fluorocarbon polymer underlayer and the properties as an optical recording medium are primarily due to the ratio (F/C) of the number of fluorine atoms to the number of carbon atoms on the surface of the underlayer which contacts the recording layer.

When the F/C ratio is less than 0.9, hardly any improvement of the sensitivity as compared to the case where the recording layer is deposited directly on the polycarbonate substrate is observed. With an increase of the F/C ratio to above 0.9, the power of the laser beam necessary for recording decreases monotonously; thus the recording sensitivity is improved. The improvement of the recording sensitivity is saturated for a F/C ratio of not less than 1.4.

When the F/C ratio is not less than 1.4, there are no remnants in the pits and uniform pits having smooth and well-defined rims are formed without being dependent on the process for producing the underlayer and on the detailed morphology of the underlayer surface. A high C/N ratio can be attained. Accordingly to obtain an optical recording medium having particularly high sensitivity and C/N ratio, the F/C ratio should be not less than 1.4.

However, when the F/C ratio is more than 1.8, since the adhesion between the recording layer and the underlayer deteriorates, the minimum size of the pits tends to be enlarged when forming the pits by the same laser power as compared to the case when the F/C ratio is not more than 1.8. Thus there is a limit of carrying out the recording at high density.

In order to perform high density recording, it is necessary to make the size of the pits small. For this purpose it is necessary to increase the adhesion between the recording layer and the underlayer. When the F/C ratio is not less than 1.4, the adhesion is nearly constant and there is no improvement. By making the F/C ratio less than 1.4, the adhesion increases and it is possible to make the size of the pits small. Accordingly, by making the F/C ratio to from not less than 0.9 to less than 1.4, a recording of high density can be attained with improved recording sensitivity. However, when the F/C ratio is from not less than 0.9 to less than 1.4, remnants may remain in the pits and the shapes of the rim can be irregular under certain conditions for preparing the fluorocarbon polymer layer. There are cases where a high C/N ratio cannot be obtained when a F/C ratio of not less than 1.4 cannot be obtained. However, the C/N ratio in the case of an F/C ratio of from not less than 0.9 to less than 1.4 is superior to that in the case when no underlayer is used.

In order to overcome the above-mentioned problems concerning the disorder of the pit shape, it is necessary to control not only the ratio of the number of fluorine atoms to the number of carbon atoms in the fluorocarbon polymer layer but also the structure of the layer. This is attained, as can be seen in the C$_{IS}$ spectrum obtained by the ESCA method, by controlling the composition of the underlayer so that not less than 18 atomic% of the total number of carbon atoms make up the -CF$_3$ groups and from not less than 18 to less than 40 atomic% of the total number of carbon atoms make up the >CF$_2$ groups.

When the amount of >CF$_2$ groups is too small, the sensitivity is poor. On the other hand, when the amount is too large, the size of the pits is too large. These media are not suitable for recording at high density. In addition, when the amount of -CF$_3$ groups is too small, remnants remain in the pits and the pit shapes are irregular. Since the irregularities are detected as noise, the C/N ratio is low.

Although a particularly favorable pit shape and accordingly, a remarkably improved C/N ratio, is obtained by using the above-mentioned conditions to obtain a thin fluorocarbon polymer underlayer, the F/C ratio is preferably from not less than 0.4 to less than 1.4. An improvement of the C/N ratio can be obtained to some degree by using the above-mentioned conditions when the F/C ratio is not less than 1.4 and not more than 1.8.

Since the ratio F/C and the amount of >CF$_2$ and -CF$_3$ groups control the properties of the interface of the fluorocarbon polymer underlayer which contacts the recording layer, it is enough that only the surface region of the fluorocarbon polymer underlayer which contacts the recording layer has the above-mentioned composition. It is not necessary for the whole fluorocarbon polymer underlayer to have the above-mentioned composition.

To make the composition and structure of the underlayer most suitable according to the above-mentioned results, it is necessary to take account of the combination of several recording layers and the driving system, which effects the recording and readout. The flexibility of the thin layer of fluorocarbon polymer can be optimized by only changing the raw materials thereof, such as the gaseous monomer or the sputtering target, or by controlling the discharge conditions even when using the same apparatus for fabricating the layer.

The capacitively coupled plasma polymerization can be actualized by only exchanging the target of the sputtering apparatus taking the parallel electrode structure with a material which is not subjected to sputtering such as stainless steel. In the same sputtering apparatus the plasma polymerization of a fluorocarbon monomer and the sputtering of the polyfluorocarbon can be carried out. The above-mentioned method has a merit of having a large for selecting the process for production and the raw material. Furthermore, it is also easy to construct an in-line process including the process for preparing the recording layer by the reactive sputtering method.

The method for controlling the composition and structure of the thin fluorocarbon underlayer is now explained in detail:

The sputtering of the polyfluorocarbon (e.g. a tetrafluoroethylene polymer, a copolymer of tetrafluoroethylene and hexafluoropropylene or a copolymer of tetrafluoroethylene and perfluoroalkoxyethylene) is carried out by introducing argon gas under a pressure of from 0.67 to 1.3 Pa ($5 \times 10^{-3}$ to $1 \times 10^{-2}$ Torr) between the parallel electrodes and applying an electric field having a radio frequency thereon.

The plasma polymerization of the fluorocarbon (e.g tetrafluoroethylene or hexafluoropropylene) is carried out by introducing a fluorocarbon monomer under a pressure of from 0.67 to 1.3 Pa ($5 \times 10^{-3}$ to $1 \times 10^{-2}$ Torr) also between the parallel electrodes and applying an electric field having a radio frequency thereon.

The vacuum evaporation may also be carried out by an electric resistance heating method. The F/C ratio in the surface layer of the fluorocarbon polymer obtained by using a capacitively coupled plasma polymerization apparatus depends on the monomeric gas, the form of the apparatus, the conditions of electric discharge and, particularly, on the discharge power and the pressure of the gaseous monomer. An F/C ratio of from 0.2 to 1.5 is easily achievable. In the surface of the fluorocarbon polymer layer obtained by sputtering, an F/C ratio of from 1.1 to 1.8 is easily obtainable.

In order to make the ratio of the number of fluorine atoms to the number of carbon atoms on the surface of the underlayer which contacts the recording layer to not less than 0.9, radicals such as $-CF_3$ and $>CF_2$ are generated as large amount as possible and made to impinge onto the glowing surface of the films. Alternatively the growing surface of the thin layer of fluorocarbon polymer, which has been adhered to the substrate, is, as far as possible, not exposed to high energy particles (electrons and ions) in the plasma.

Concretely, in the sputtering method, it is preferred that the F/C ratio of the target material is raised, the distance between the electrodes is increased and the power of the electrical discharge is raised to increase the deposition rate of the fluorocarbon polymer layer.

The F/C ratio can be further raised also by mixing a fluorocarbon monomer such as $CF_4$ or $C_2F_6$ with the inert gas, such as argon, which is used in the sputtering. Furthermore, the F/C ratio can be raised by raising the F/C ratio of the evaporated polyfluorocarbon in the vacuum evaporation method.

On the other hand, in the plasma polymerization method using an inductively coupled electric discharge, the substrate is established avoiding the internal part of the coil, where the plasma density is high. In the plasma polymerization method using a capacitively coupled electric discharge, the parallel electrodes are separated and the substrate is established on one of the electrodes, preferably on the electrode on the earth side.

The amount of $>CF_2$ and $-CF_3$ groups can be increased by using a lower electric discharge power, a higher gas pressure and a higher gas flow rate.

The ratio of the number of fluorine atoms to the number of carbon atoms in the fluorocarbon polymer underlayer which contacts the recording layer is from 0.9 to 1.8. Furthermore not less than 18 atomic% of the total number of carbon atoms preferably present in the $-CF_3$ groups and from not less than 18 atomic% to less than 40 atomic% of the total number of carbon atoms are preferably present in the $>CF_2$ groups. It is necessary to control the fine structure shown by ESCA spectrum.

The structures of the plasma fluorocarbon polymerized layer and the fluorocarbon polymer sputtered layer reflect those of the gaseous monomer and the target material to a certain extent. When the $-CF_3$ groups are contained in a large amount in the gaseous monomer or when the radicals and ions generated in the plasma are rich in $CF_3$ groups, the -$CF_3$ groups are apt to be taken into the polymerized layer. For instance, when using hexafluoropropylene as the monomer, it is possible to increase the amount of -$CF_3$ groups in the polymerized layer to a greater extent than when using tetrafluoroethylene as the monomer. Moreover, by mixing carbon tetrafluoride with tetrafluoroethylene, the content of -$CF_3$ group in the polymerized layer can again be raised. Still further, there is a tendency that a large amount of >$CF_2$ groups are contained in a deposited layer made from monomer gas containing an unsaturated bond. The layer deposited by sputtering polytetrafluoroethylene also reflects the structure of the target and contains >$CF_2$ groups in a large amount. However, the amount of -$CF_3$ groups can be raised also by carrying out the reactive sputtering with a gaseous mixture obtained by mixing hexafluoropropylene or carbon tetrafluoride with argon gas.

For example, a plasma polymerized layer of hexafluoropropylene which fulfills the requisites of the present invention has been obtained under the conditions of a pressure of 0.67 to 1.3 Pa ($5 \times 10^{-3}$ to $1 \times 10^{-2}$ Torr), a gas flow rate of 300 to 500 cc/min (determined by a capillary-type flow meter set up for argon gas) and an electric discharge power of from 100 to 200 W.

However, in the plasma polymerization and the sputtering method, it is well known that the electric discharge conditions depend on the shape and performance of the apparatus used (size and shape of the vacuum chamber, vent property, method by which the reactive gas is introduced, and shape, size and structure of the electrodes). Accordingly, in the above-mentioned description and the following Examples, concrete values of, for example, the electric discharge gas pressure, flow rate and electric discharge are optimalized according to the individual apparatus. The present invention is not limited by the above-mentioned concrete values. Furthermore, when using an apparatus having the same shape, size, structure and performance, it is easy to have reproducibility.

In the present invention, a chlorofluorocarbon polymer may be used as the underlayer. In such a case, it is preferred to have a layer having ratio of the number of fluorine atoms to the number of carbon atoms in the surface of the underlayer which contacts the recording layer of from 0.9 to 1.4, and a layer which contains chlorine in an amount of from 5 to 15 atomic%.

A thin layer of chlorofluorocarbon is obtainable by sputtering of polychlorotrifluoroethylene, reactive sputtering of polytetrafluoroethylene in a gaseous mixture of argon gas and a chlorofluorocarbon gas such as FREON 113 (Trade Mark) ($CCl_2F$ - $CClF_2$) or a chlorofluorocarbon plasma treatment on the surface of the deposited layer by sputtering of polytetrafluoroethylene. Furthermore, the thin layer of chlorofluorocarbon is also obtainable by plasma polymerization using the chlorofluorocarbon gas as the monomer. The thickness of the above-mentioned layer is generally from 2 to 100 nm (20 to 1000 Å).

In the above-mentioned thin fluorocarbon polymer layer containing chlorine atoms, since the chlorine atoms terminate free bonds of the carbon atoms in the same manner as fluorine atoms, the crosslinking of carbon atoms is hindered. Accordingly the layer has a structure low in crosslinking degree. Consequently, the resistance in removing melted substances from the recording layer is small. On the other hand, since chlorine atoms, in contrast with fluorine atoms, increase the surface tension of high polymeric substances, the adhesion itself is raised to a considerable extent. By evaluating the adhesion of the recording layer to the underlayer using a simple peeling method, it has been confirmed that the adhesion of the underlayer containing chlorine atoms is several times as large as that of the underlayer not containing chlorine atoms, both underlayers having the same F/C ratio.

However, when chlorine atoms are present in an amount of greater than 15 atomic%, the adhesion thereof is reduced.

In the case of the present invention, it is enough that the composition of the surface of the underlayer which contacts the recording layer, is made to be the above-mentioned composition. It is not necessary to make the composition of the whole underlayer to be the above-mentioned composition.

By subjecting the thus obtained fluorocarbon polymer underlayer to plasma treatment by an inert gas before forming the recording layer on the underlayer, the adhesion can be improved, the shortest pit length is shortened and on the other hand, high sensitivity and an improvement in the shape of the pits can be achieved.

In the case where a plasma treatment is used and the recording layer is an alloy containing Te and Se, it is more favorable to treat the fluorocarbon polymer layer to ensure that the ratio of the number of fluorine atoms to the number of carbon atoms in the surface of the layer of the fluorocarbon polymer which contacts the recording layer is from 1.0 to 1.2.

Due to the coming off of fluorine atoms, the surface tension of the surface of the fluorocarbon polymer layer becomes larger, and moreover, due to the crosslinking of the carbon atoms, the density and the molecular weight of the crosslinked layer on the surface of the fluorocarbon polymer layer are raised.

Every one of the above-mentioned changes of the surface layer raises the adhesion between the recording layer and the underlayer. The thickness and the degree of crosslinking of the surface layer can be controlled by the conditions of plasma discharge, particularly by the power of the discharge, the duration of exposure to the plasma and the distance between the substrate and the electrode. As a result it is possible to control within wide limits the adhesion of the recording layer to the underlayer and to optimize the properties of each kind of recording layer.

The above-mentioned effect of the plasma treatment on the surface of the thin fluorocarbon polymer layer has been confirmed as follows:

A sputtered layer of polytetrafluoroethylene (PTFE) was prepared, and the layer was subjected to the plasma treatment by argon plasma under a pressure of 0,67 Pa ($5 \times 10^{-3}$ Torr) at a discharge power of l00 W. Thereafter the contact angle of the layer and the F/C ratio within l0 nm from the surface of the layer were measured by the ESCA method as previously described.

It was confirmed that the contact angle and F/C ratio were reduced with an increase in the duration of the treatment. On the other hand, when a recording layer of the TeSe-SeF$_6$ series was formed on the plasma treated fluorocarbon polymer underlayer and the adhesion was measured by a simple peeling method, it was found that the adhesion was increased by several times as compared to the adhesion measured before subjecting the layer to the treatment.

In the following Examples the improving effect in the recording and reading-out property of the optical information storage medium according to the present invention are described in more detail:

EXAMPLE l:

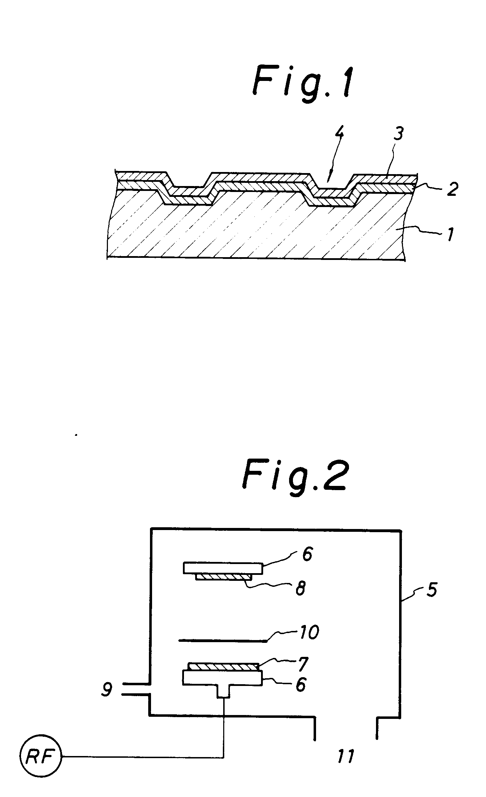

Fig. 2 shows one example of an apparatus for producing an optical recording medium according to the present invention by reactive sputtering.

In Fig. 2, (5) is a vacuum chamber, (6) are cathode and anode electrodes, (7) is an alloy target containing Te and Se, (8) is a substrate, (9) is a gas inlet, (l0) is a shutter and (ll) is an exhaust gas outlet.

At first, the vacuum chamber (5) was evacuated to a back pressure of about 13 mPa ($10^{-6}$ Torr) and then argon gas was introduced into the chamber (5) from the gas inlet (9) to raise the inner pressure of the chamber (5) to 0.67 Pa ($5 \times 10^{-3}$ Torr). A radio frequency voltage at l3.56 MHz was continuously applied between the electrodes (6) to cause a glow discharge for about l0 minutes to clean the surface of the target (7). Thereafter the inner space of the chamber (5) was evacuated again to 13 mPa ($10^{-6}$ Torr) and a gaseous mixture of 90% by volume of argon and l0% by volume of gaseous SeF$_6$ was introduced into the chamber (5) from the gas inlet (9) to make the total pressure 0.67 Pa ($5 \times 10^{-3}$ Torr). Thereafter, by applying a radio frequency voltage of 50 W power at l3.56 MHz between the anode (6) on the side of the substrate and the cathode (6) on the side of the target (7), a glow discharge was created to carry out the sputtering. As the target, an alloy of 88 atomic % of Te and l2 atomic % of Se was used, and a 40 nm thick sputtered layer was deposited on the substrate. The content of Se in the deposited layer was l5 atomic %, and the content of fluorine atoms therein was 20 atomic %. Recording and reading-out were carried out on the thus produced optical recording medium by a semiconductor laser diode of wavelength 830 nm (pulse width of 500 ns). A sensitivity of 4mW and a C/N ratio of 52 dB were obtained.

EXAMPLE 2:

After evacuating a vacuum chamber to 40 mPa ($3 \times 10^{-6}$ Torr) argon gas was introduced to a pressure of 1.3 Pa (l $\times$ l0$^{-2}$ Torr) and using an electric glow discharge at l00 W and l3.56 MHz, a sputtered layer (F/C ratio of l.6) of about 15 nm (l50 Å) was deposited on a substrate of polycarbonate resin. Thereafter, the electrode on the side of the substrate was moved right over the alloy target made of 88% Te and l2% Se, and after carrying out pre-sputtering, SeF$_6$ gas was introduced into the chamber in a volume ratio of l0% to make the total pressure in the chamber 0.67 Pa ($5 \times 10^{-3}$ Torr). Thereafter, by applying a radio frequency voltage of 50 W power at l3.56 MHz between the electrode on the side of the substrate and the electrode on the side of the target, a glow discharge was caused to carry out the sputtering. A 40 nm thick sputtering layer was deposited on the substrate. The content of Se in the deposited layer was l5 atomic %, and the content of fluorine atoms therein was 20 atomic %.

On carrying out recording and reading-out on the thus fabricated optical recording medium by a semiconductor laser diode of wavelength 830 nm (pulse width of 500 ns), a C/N ratio of 57 dB was obtained. The recording sensitivity was 2.4 mW.

Fig. l shows a longitudinal crosssectional view of the thus obtained optical recording medium. In Fig. l, (l) is a substrate, (2) is an underlayer, (3) is a recording layer and (4) is a channel for a track-servo.

EXAMPLE 3:

By flowing 50 cm$^3$/minute of monomeric tetrafluoroethylene (determined by a capillary-type flow meter set up for argon gas) and l5 cm$^3$/minute of argon gas through a mass-flow controller which had been calibrated to argon, the vacuum chamber was filled with the reactive gas at a total pressure of 0.67 Pa (5 × l0$^{-3}$ Torr). A capacitively coupled radio frequency voltage at l3.56 MHz was applied to cause a glow discharge for 5 minutes at a discharge power of l00 W, thereby forming a plasma polymerized layer (F/C ratio of l.l) of a thickness of about 15 nm (l50 Å). After that, in the same manner as in Example 2, a 40 nm thick deposited layer of Te, Se and F was formed.

On carrying out recording and reading-out on the thus produced optical recording medium in the same manner as in Example 2, a C/N ratio of 56 dB was obtained. The recording sensitivity was 3.4 mW.

COMPARATIVE EXAMPLE l:

After evacuating a vacuum chamber to 40 mPa (3 × l0$^{-6}$ Torr) argon gas was introduced into the vacuum chamber and a glow discharge was created between the substrate and the target by a radio frequency voltage of 50 W power at l3.56 MHz.

As the target, an alloy of 85 atomic % Te and l5 atomic % Se was used, and a 40 nm (400 Å) thick Te-Se deposited layer was formed on the substrate. On carrying out a recording-reading-out test by a semiconductor laser diode on the thus obtained optical recording medium, the C/N ratio was 45 dB. The recording sensitivity was 4.5 mW. There were local irregularities of recording sensitivity.

Moreover, when forming a deposited layer of Te and Se by sputtering only with argon gas on an underlayer comprising a sputtered fluorocarbon polymer layer formed in the same manner as in Example 2, the C/N ratio was only 45 dB. In addition, the recording sensitivity was 4 mW.

EXAMPLES 4 to 6, COMPARATIVE EXAMPLES 2 and 3:

The vacuum chamber was evacuated to 1.3 x 10$^{-4}$ Pa (l0$^{-6}$ Torr) and then SeF$_6$ gas and argon gas were introduced thereinto at a flow ratio shown in Table I. By applying a high frequency voltage between the electrodes in the same manner as in Example I, an electric discharge was caused.

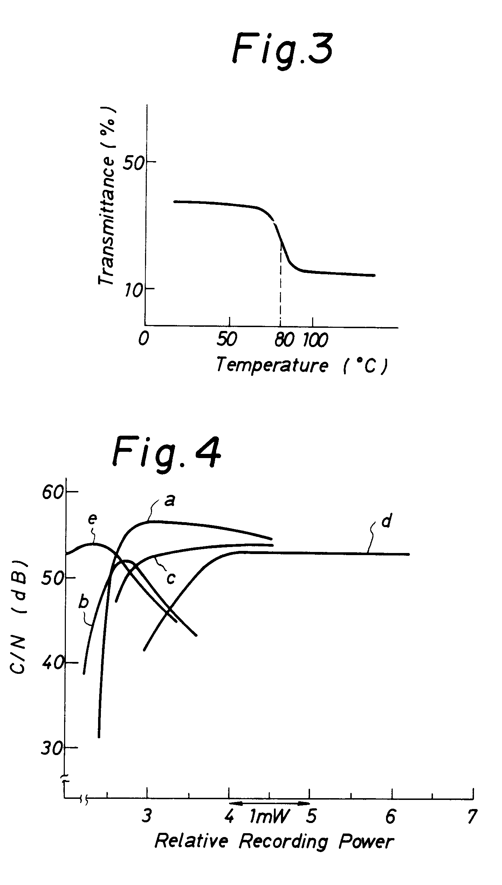

The discharge power and the pressure within the vacuum chamber were as shown in Table I. Glass substrates of 12 mm thickness were used. The thickness of each deposited layer was from 30 to 40 nm (300 to 400 Å). The fluorine content (shown by atomic %) of the layer after annealing is shown in Table I. In order to evaluate the annealing temperature necessary for stabilizing the crystal structure of the sputtered deposited layer, the dependency of the transmission of the recording layer on the temperature was measured. As an example of the relationship between the temperature and the transmission, Fig. 3. shows details of the specimen of Example 4 in Table I in the case of raising the temperature at l3$^\circ$C/minute. It has been confirmed by X-ray and electron beam diffraction and the transmission electron microscopic image that the rapid change of the transmissivity in the narrow temperature range shown in Fig. 3 is due to the change in micro-structure of the layer, that is the growth of the crystals and then the saturation of reflectivity means stabilization of the micro-structure. Table I shows the temperature at which the transmission changes, that is the crystallization temperature of the layer (corresponding to the point on the dotted line of Fig. 3) in the case of raising the temperature at l3$^\circ$C/minute and the maximum value of the grain size after crystallization.

The recording medium of Examples 4 and 5 and Comparative Example 2 and 3 was formed on a disk-shaped polycarbonate resin substrate with a hexafluoropropylene polymer underlayer was formed on the substrate. The changes in the properties of the disk were examined before and after annealing, which was carried out in air at 80$^\circ$C for one hour.

With the formation of the polycrystalline state by the annealing, the reflectivity of the recording medium became about l.l times the initial value and stabilized at that level. By the above-mentioned procedure, it was possible to raise the intensity of carrier signals without increasing the noise of the readout signal.

In Examples 4 to 5, a stabilized and uniform micro-structure was formed by annealing, which did not show any unfavorable effects such as noise in the readout signal. There was no local irregularity of the sensitivity and uniform pits were formed. As a result, an improvement of from 2 to 3 dB in C/N ratio was achieved.

In Comparative Examples 2 and 3, selenium fluoride gas was not used or carbon disulfide gas was used instead of selenium fluoride gas. In Comparative Examples 2 and 3, since the grain size was large, the readout signal noise was high and the shape of the pits was also irregular.

As seen in the above Examples, the grain size of the crystals of the recording medium according to the present invention is small, and it is possible to control the crystallization temperature, particularly to not less than 90 °C.

Furthermore the optical properties were quite stable in an accelerated test at 65 °C and 80% RH. Also, on examining the change in quality of the recording medium due to repeated irradiation on the same track by the readout light, degradation in quality of the medium before annealing began at a power of the readout laser beam of l.3 mW and accurate readout was impossible. However the medium was quite stable after annealing.

Accordingly, it was clear that the stabilization of the micro-structure of the recording medium had been sufficiently attained by the annealing.

In Example 6, annealing at a temperature of not less than 90 °C was necessary to obtain the same effect as the above. Such a medium was not suitable for using with a disk shaped substrate of a polycarbonate resin with a hexafluoropropylene polymer underlayer.

TABLE 1

| No. | Composition of target | Reactive gas | Flow ratio (reactive gas/Argon gas) | Discharge power (W) | Pressure (Torr) Pa | Content of fluorine (atomic %) | Crystallization temperature (°C) | Crystal size (A) | C/N (dB) |
|---|---|---|---|---|---|---|---|---|---|
| Example 4 | Te$_{90}$Se$_{10}$ | SeF$_6$ | 5/200 | 300 | $(5 \times 10^{-3})$ 0.67 | 12 | 80 | (<1000) <100 | 55 |
| Example 5 | Te$_{90}$Se$_{10}$ | SeF$_6$ | 5/30 | 300 | $(5 \times 10^{-3})$ 0.67 | 25 | 90 | (< 500) <50 | 55 |
| Example 6 | Te$_{90}$Se$_{10}$ | SeF$_6$ | 30/30 | 300 | $(5 \times 10^{-3})$ 0.67 | 35 | 110 | (< 500) <50 | 53 |
| Comparative Example 2 | Te$_{88}$Se$_{12}$ | – | 0/30 | 300 | $(5 \times 10^{-3})$ 0.67 | – | Crystallized before annealing | (≤20000) ≤2000 | 45 |
| Comparative Example 3 | Te$_{88}$Se$_{12}$ | CS$_2$ | 5/30 | 50 | $(5 \times 10^{-3})$ 0.67 | – | 80 | (< 5000) <500 | 50 |

EXAMPLES 7 to l0 and COMPARATIVE EXAMPLES 4 to 8:

Each of several fluorocarbon polymer underlayers as shown in Table 2 was provided on a substrate (l30 mm diameter and l.2 mm thickness) of polycarbonate resin by sputtering or plasma polymerization.

14

The sputtering of the fluorocarbon polymer (tetrafluoroethylene resin, copolymer of tetrafluoroethylene and hexafluoropropylene or copolymer of tetrafluoroethylene and perfluoroalkoxyethylene) was carried out by introducing argon gas under a pressure of from 0.67 to 1.3 Pa ($5 \times 10^{-3}$ to $1 \times 10^{-2}$ Torr) between parallel electrodes and applying a radio frequency voltage of from 50 to 200 W power at 13.56 MHz.

The plasma polymerization of the fluorocarbon (tetrafluoroethylene or hexafluoropropylene) was carried out also by introducing the gaseous monomer under a pressure of from 0.67 to 1.3 Pa ($5 \times 10^{-3}$ to $1 \times 10^{-2}$ Torr) between the parallel electrodes and applying a radio frequency voltage of from 100 to 600 W power at 13.56 MHz.

The reactive sputtering was carried out on the underlayer while using an alloy target consisting of 88% Te and 12% Se and introducing $SeF_6$ gas and argon gas in the same manner as in Example I. A 40 nm (400 Å) thick recording layer was formed. The composition of the thus obtained layers is the same as that in Example I.

F/C, $CF_3$/C, $CF_2$/C, the presence or absence of remnants in the pits and the recording sensitivity of the thus obtained recording media were measured, the results being shown in Table 2:

TABLE 2

| No. | Method for forming the underlayer | F/C | $-CF_3/C$ | $>CF_2/C$ | Remnants in the pits | Recording sensitivity (mV) | C/N ratio (maximum value) (dB) |
|---|---|---|---|---|---|---|---|
| Example 7 | Sputtering of polytetrafluoroethylene (discharge power of 200 W) | 1.5 | 21 | 33 | none | 2.5 | 54 |
| Comparative Example 4 | the same as above (power of 50 W) | 1.4 | 12 | 28 | yes | 3.0 | 50 |
| Example 8 | Sputtering of copolymer of tetrafluoroethylene and hexafluoropropylene (power of 200 W) | 1.7 | 22 | 38 | none | 2.3 | 54 |
| Example 9 | Sputtering of copolymer of tetrafluoroethylene and perfluoroalkoxyethylene (power of 200 W) | 1.6 | 22 | 37 | none | 2.3 | 54 |

EP 0 242 942 B1

TABLE 2 (Cont'd)

| No. | Method for forming the underlayer | F/C | $-CF_3/C$ | $>CF_2/C$ | Remnants in the pits | Recording sensitivity (mV) | C/N ratio (maximum value) (dB) |
|---|---|---|---|---|---|---|---|
| Comparative Example 5 | Plasma polymerization of tetrafluoroethylene (power of 100 W) | 1.1 | 15 | 20 | yes | 3.4 | 52 |
| Example 10 | Plasma polymerization of hexafluoropropylene (power of 100 W) | 1.3 | 21 | 21 | none | 3.4 | 57 |
| Comparative Example 6 | the same as above (power of 600 W) | 0.9 | 15 | 25 | yes | 3.5 | 50 |
| Comparative Example 7 | Reactive sputtering of polytetrafluoroethylene in a gaseous mixture of hexafluoropropylene and argon | 1.3 | 17 | 36 | almost none | 3.4 | 50 |
| Comparative Example 8 | Without underlayer | – | – | – | yes | 4.0 | 48 |

The recording and reading-out was carried out by a semiconductor laser beam using the above-mentioned optical recording medium on a 130 mm diameter disk-shaped substrate of polycarbonate resin.

The power of the laser beam necessary for writing was taken as the recording sensitivity. In addition, the shapes of the formed pits and the presence or absence of remnants in the pits were observed by scanning electron microscopy (SEM).

When the remnants were absent, the rim of the pit was well-defined without any irregularity and the C/N ratio of the optical recording medium was improved by a few dB as compared to the case where remnants

EP 0 242 942 B1

17

were present.

## EXAMPLE 11:

By carrying out sputtering on a disk-shaped substrate (diameter 130 mm and thickness 1.2 mm) of polycarbonate resin using polychlorotrifluoroethylene as the target under a pressure of argon gas of 1.3 Pa ($1 \times 10^{-2}$ Torr) and at a discharge power of 100 W, an underlayer having a thickness of about 15 nm (150 Å) was formed. On measuring the composition of the surface of the thus formed underlayer by the ESCA method, the ratio of the number of fluorine atoms to the number of carbon atoms was found to be 1.1 and the underlayer contained 12 atomic% of chlorine.

By sputtering $Te_{88}Se_{12}$ as the recording layer on the thus formed underlayer in a gaseous mixture of argon and $SeF_6$, a medium of TeSe-$SeF_6$ series (consisting of 15 atomic% Se, 20 atomic % F and the balance Te, and having a thickness of 40 nm (400 Å)) was prepared. Evaluation of the writing and reading-out properties of the medium was carried out under the following conditions:

The disk-shaped substrate was rotated at 1800 rpm, and recording and reading-out were carried out on the tracks at a distance of about 30 mm from the rotating axis by a semiconductor laser diode of a wavelength of 830 nm. The recording was carried out by a pulse light of 1.0 MHz and duty of 50 %.

The dependency of the C/N ratio (carrier to noise ratio) to the recording power is shown in Fig. 4 (a). The C/N ratio was larger than 55 dB and showed a stable specific property within a broad range of the recording power. On carrying out SEM observation, remnants could scarcely be found in the pits.

## COMPARATIVE EXAMPLE 9:

In Fig. 4, (b) and (c) respectively show the dependency of the C/N ratio on the recording power in the case of forming the same recording layer as in Example 2 on the polytetrafluoroethylene underlayer by sputtering, wherein the ratio of the number of fluorine atoms to the number of carbon atoms was 1.5 [in the case of (b)] and 1.25 [in the case of (c)]. Also in Fig. 4 (d) shows the case where the recording layer was directly formed on the polycarbonate substrate without using an underlayer.

Furthermore, (e) in Fig. 4 shows the case wherein a reactive sputtering of polychlorotrifluoroethylene was carried out in a gaseous mixture of argon gas and $CCl_2F$-$CClF_2$ to form a layer in which the ratio of the number of fluorine atoms to the number of carbon atoms was 0.85 and which contained 19 atomic % of chlorine, as the underlayer.

In the case of (b) wherein the ratio of the number of fluorine atoms to the number of carbon atoms was high, if the content of chlorine was too large as in the case of (e), the C/N ratio was rapidly reduced with an increase in recording power. It is understood as a result of SEM observation that this is due to the rapid increase of pit size with the increase of the recording power. On the other hand, although the pit size is stable in the cases of (c) and (d), the amount of remnants in the pits was large and there was much irregularity in the shape of the pits. Accordingly only a low C/N ratio was obtained over a wide range of recording power.

## EXAMPLE 12:

Sputtering of polytetrafluoroethylene (PTFE) was carried out under a pressure of argon gas of 1.3 Pa ($1 \times 10^{-2}$ Torr) and at a discharge power of 200 W to form a thin layer having a thickness of about 20 nm (200 Å) on a disk-shaped polycarbonate resin substrate. Thereafter, the thus prepared material was subjected to plasma treatment under a pressure of argon gas of 0.7 Pa ($5 \times 10^{-3}$ Torr) at a discharge power of 50W for 30 seconds.

On the above-mentioned underlayer which had been treated, and as a comparison, an underlayer which had not been treated and a substrate not having an underlayer, reactive sputtering of $Te_{88}Se_{12}$ was carried out in a gaseous mixture of $SeF_6$ and argon gas, to form a thin layer having a thickness of about 40 nm (400 Å) which contained Te and Se in the same manner as Example 1.

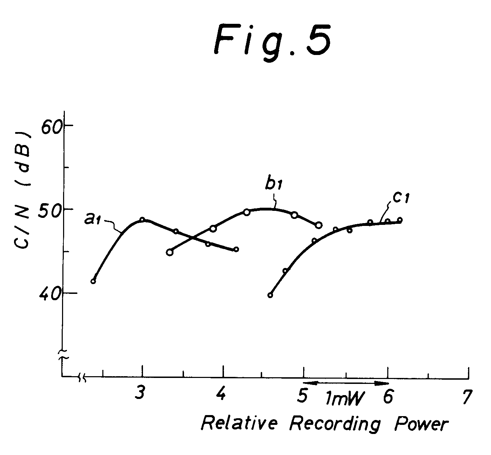

Fig. 5 shows the dependency of the C/N ratio on the recording power. In Fig. 5, $a_1$ shows the case for the underlayer which has not been treated in the plasma, $b_1$ shows the case of the plasma treated underlayer and $c_1$ shows the case without having an underlayer. The sensitivity of the medium $b_1$ was better than the sensitivity of the medium $c_1$, the C/N ratio of the medium $b_1$ was larger than C/N ratio of the medium $a_1$ by from 2 to 3 dB, and the dependency of the C/N ratio of the medium $b_1$ on the recording power was smaller than that of the medium $a_1$. It was found as a result of observation by SEM that the above-mentioned facts were due to the relatively slight increase of the pit size in the medium $b_1$ in contrast

to the rapid increase of the pit size in the medium $a_1$ with increase of recording power.

Furthermore, the amount of remnants in the pits was smaller in $b_1$ than in $c_1$, and a uniform rim was formed in $b_1$.

The plasma treating conditions for obtaining the optimized property of $b_1$ can be decided by the ESCA method.

It is desirable to decide the treating conditions and the treating period so that the ratio of the number of fluorine atoms to the number of carbon atoms in the layer within 10 nm from the treated surface is from 1.0 to 1.2.

EXAMPLE 13:

A polymethyl methacrylate resin (PMMA) or polycarbonate resin (PC) substrate which had been preliminarily washed was set in a vacuum room, and after evacuating to about $1.3 \times 10^{-4}$ Pa ($1 \times 10^{-6}$ Torr), 20 $cm^3$/min of argon (determined by a capillary-type flow meter) and 5 $cm^3$/min of $SeF_6$ (determined by a capillary-type flow meter set up for argon) were introduced into the room to raise the pressure thereof to about 0.67 Pa ($5 \times 10^{-3}$ Torr). As a target material, Te was used. Reactive sputtering using a high frequency power of 50 W for 15 seconds between electrodes at a distance of 80 mm was carried out to form a deposited layer of about 25 nm (250 Å) thickness.

In the case of recording the thus obtained layer (recording layer) using a semiconductor laser diode of an output of 4 mW at 830 nm, on recording the layer deposited on the PMMA substrate, the pits were formed by a pulse width of 200 nsec, and on the layer deposited on the PC substrate, the pits were formed by a pulse width of 250 nsec.

After preserving the thus prepared specimens in an accelerating atmosphere of 60°C and 80% RH for one month, the light reflectivity (in the extent of 30%) at 830 nm did not show any change before and after the acceleration.

**Claims**

1. An optical recording medium on which information can be recorded by irradiation with a laser beam, which medium comprises:
   (a) a substrate and
   (b) a recording layer which contains, based on the composition of the layer, from 35 to 94.9 atomic % of Te, from 5 to 25 atomic % of Se and from 0.1 to 40 atomic % of F.

2. An optical recording medium according to claim 1, wherein the recording layer has been produced by reactive sputtering, the Se being derived from selenium fluoride and a sputtering target comprising a Te-Se-alloy.

3. An optical recording medium according to claim 1, wherein the recording layer has been produced by reactive sputtering using selenium fluoride and a target of Te.

4. An optical recording medium according to any one of claims 1 to 3, wherein an underlayer comprising a fluorocarbon polymer is provided between the said substrate (a) and the said recording layer (b), the atomic ratio of fluorine to carbon at the surface of the said underlayer which contacts the said recording layer being 0.9 to 1.8:1 as measured according to the ESCA method.

5. An optical recording medium according to claim 4, wherein the said underlayer is a sputtered film of polytetrafluoroethylene or a plasma polymerized film of hexafluoropropylene or tetrafluoroethylene.

6. An optical recording medium according to claim 4 or 5, wherein not less than 18% of the carbon atoms at the surface of the said underlayer which contacts the said recording layer are present as $-CF_3$ groups and from 18% to less than 40% of the carbon atoms at the said surface are present as $>CF_2$ groups.

7. An optical recording medium according to any one of claims 1 to 3, wherein an underlayer comprising a chlorofluorocarbon polymer is disposed between the said substrate (a) and the said recording layer (b), the atomic ratio of fluorine to carbon at the surface of the said underlayer which contacts the said recording layer being 0.9 to 1.4:1 and the said surface containing from 5 to 15 atomic % of chlorine.

8. A process for producing an optical recording medium, which process comprises carrying out reactive sputtering in a gaseous mixture of a selenium fluoride gas and argon gas while using an alloy containing Te and Se as a target material so as to form a recording layer containing, based on the composition of the layer, from 35 to 94.9 atomic % of Te, from 5 to 25 atomic % of Se and from 0.1 to 40 atomic % of F on a substrate.

9. A process according to claim 8, wherein a Te-Se-alloy containing from 1 to 30 atomic % of Se is used as the said target material.

10. A process for producing an optical recording medium, which process comprises carrying out reactive sputtering in a gaseous mixture of a selenium fluoride gas and argon gas while using a target of Te so as to form a recording layer containing, based on the composition of the layer, from 35 to 94.9 atomic % of Te, from 5 to 25 atomic % of Se and from 0.1 to 40 atomic % of F on a substrate.

11. A process according to any one of claims 8 to 10, wherein the proportion of selenium fluoride gas in the said gaseous mixture is from 0.1 to 50% by volume.

12. A process according to any one of claims 8 to 11, wherein the said recording layer comprises a deposited layer containing Te, Se and F annealed at a temperature of from 60 to 130 $^\circ$C.

13. A process according to claim 12, wherein the said annealed deposited layer has a polycrystalline structure of crystals having the particle diameter of below 1,000 Å.

14. A process according to claim 12 or 13, wherein the annealing is carried out at a temperature of 60 to 100 $^\circ$C.

15. A process according to any one of claims 12 to 14, wherein the content of fluorine in the said annealed deposited layer is from 0.1 to 30 atomic %.

16. A process according to any one of claims 8 to 15, wherein an underlayer comprising a fluorocarbon polymer is disposed between the said recording layer comprising Te, Se and F and the said substrate.

17. A process according to claim 16, wherein the said underlayer is formed on the said substrate by a plasma polymerization of a fluorocarbon or by sputtering of a polyfluorocarbon.

18. An optical recording medium on which information has been recorded, said medium being as claimed in any one of claims 1 to 7 or produced by a process as claimed in any one of claims 8 to 17.

**Revendications**

1. Milieu d'enregistrement optique sur lequel l'information peut être enregistrée par irradiation au moyen d'un faisceau laser, lequel milieu comprend :
   (a) un substrat ; et
   (b) une couche d'enregistement qui contient, en ce qui concerne la composition de la couche, de 35 à 94,9 % d'atomes de Te, de 5 à 25 % d'atomes de Se et de 0,1 à 40 % d'atomes de F.

2. Milieu d'enregistrement optique selon la revendication 1, où la couche d'enregistrement a été préparée par pulvérisation réactive, le Se provenant du fluorure de Sélénium et d'une cible de pulvérisation comprenant un alliage Te-Se.

3. Milieu d'enregistrement optique selon la revendication 1 où la couche d'enregistrement a été préparée par pulvérisation réactive utilisant du fluorure de Sélénium et une cible de Te.

4. Milieu d'enregistrement optique selon l'une quelconque des revendications 1 à 3, où une sous-couche oomprenant un polymère fluorocarboné est réalisée entre ledit substrat (a) et ladite couche d'enregistrement (b), la proportion en atomes de fluor par rapport au carbone à la surface de ladite sous-couche qui est en contact avec ladite couche d'enregistrement, étant de 0,9 à 1,8/1 d'après les mesures effectuées par la méthode ESCA.

20

**5.** Milieu d'enregistrement optique selon la revendication 4 où ladite sous-couche est un film pulvérisé de polytétrafluoro-éthylène ou d'un film polymérisé par plasma de hexafluoro-propylène ou de tétrafluoro-éthylène.

**6.** Milieu d'enregistrement optique selon les revendications 4 ou 5, où sont présents pas moins de 18 % d'atomes de carbone à la surface de ladite sous-couche qui est en contact avec ladite couche d'enregistrement, sous forme de groupements - CF3, et de 18 % à moins de 40 % d'atomes de carbone à ladite surface, sous forme de groupements = CF2.

**7.** Milieu d'enregistrement optique selon l'une quelconque des revendications 1 à 3, où une sous-couche comportant un polymère chlorofluorocarboné est disposée entre ledit substrat (a) et ladite couche d'enregistrement (b), la proportion en atomes de fluor par rapport au carbone à la surface de ladite sous-couche qui est en contact avec ladite couche d'enregistrement, étant de 0,9 à 1,4/1, et ladite surface contenant de 5 à 15 % en atomes de chlore.

**8.** Procédé pour réaliser un milieu d'enregistrement optique, lequel procédé consiste en un dépôt par pulvérisation réactive dans un milieu gazeux de fluorure de Sélénium gazeux et d'Argon gazeux, et où l'on utilise un alliage contenant Te et Se comme matériau cible, afin de former sur un substrat une couche d'enregistrement contenant, en ce qui concerne la composition de la couche, de 35 à 94,9 % en atomes de Te, de 5 à 25 % en atomes de Se et de 0,1 à 40 % en atomes de F.

**9.** Procédé selon la revendication 8, où un alliage Te-Se contenant de 1 à 30 % en atomes de Se est utilisé comme dit matériau cible.

**10.** Procédé pour réaliser un milieu d'enregistrement optique, lequel procédé consiste en un dépôt par pulvérisation réactive dans un mélange gazeux de fluorure de Sélénium gazeux et d'Argon gazeux, et où l'on utilise une cible de Te afin de former sur un substrat une couche d'enregistrement contenant, en ce qui concerne la composition de la couche, de 35 à 94,9 en atomes de Te, de 5 à 25 % en atomes de Se et de 0,1 à 40 % en atomes de F.

**11.** Procédé selon l'une quelconque des revendications 8 à 10, où la proportion de fluorure de Sélénium gazeux dans ledit mélange gazeux est de 0,1 à 50 % en volume.

**12.** Procédé selon l'une quelconque des revendications 8 à 11, où ladite couche d'enregistrement comporte une couche, obtenue par dépôt, contenant Te, Se et F, recuite à une température de 60 à 130 ˚ C.

**13.** Procédé selon la revendication 12, où ladite couche obtenue par dépôt et recuite, a une structure polycristalline où les cristaux ont un diamètre de particules inférieur à 1000 Å.

**14.** Procédé selon les revendications 12 ou 13, où le recuit est réalisé à une température de 60 à 100 ˚ C.

**15.** Procédé selon l'une quelconque des revendications 12 à 14, où le pourcentage de fluor dans ladite couche, obtenue par dépôt et recuite, va de 0,1 à 30 % en atomes.

**16.** Procédé selon l'une quelconque des revendications 8 à 15, où une sous-couche comportant un polymère fluorocarboné est disposée entre ladite couche d'enregistrement contenant Te, Se et F, et ledit substrat.

**17.** Procédé selon la revendication 16, où ladite sous-couche est formée sur ledit substrat par polymérisation par plasma d'un fluorocarbone ou par pulvérisation d'un polyfluorocarbone.

**18.** Milieu d'enregistrement optique sur lequel l'information a été enregistrée, ledit milieu étant comme revendiqué dans l'une quelconque des revendications 1 à 7, ou réalisé par un procédé comme revendiqué dans l'une quelconque des revendications 8 à 17.

**Patentansprüche**

1. Optisches Aufzeichnungsmedium, auf dem eine Information durch Strahlung mit einem Laserstrahl aufgezeichnet werden kann, wobei das Medium umfasst:

   (a) ein Substrat und
   (b) eine Aufzeichnungsschicht, die, basierend auf der Zusammensetzung der Schicht, von 35 bis 94,9 Atom-% Te, von 5 bis 25 Atom-% Se und von 0,1 bis 40 Atom-% F enthält.

2. Optisches Aufzeichnungsmedium nach Anspruch 1, dadurch **gekennzeichnet,** dass die Aufzeichnungsschicht durch reaktives Bedampfen erzeugt ist, wobei sich das Se von Selenfluorid und einem Bedampfungstarget ableitet, das eine Te-Se-Legierung enthält.

3. Optisches Aufzeichnungsmedium nach Anspruch 1, dadurch **gekennzeichnet,** dass die Aufzeichnungsschicht durch reaktives Bedampfen unter Verwendung von Selenfluorid und einem Target aus Te erzeugt ist.

4. Optisches Aufzeichnungsmedium nach einem der Ansprüche 1 bis 3, dadurch **gekennzeichnet,** dass eine Unterschicht, die ein Fluorkohlenstoffpolymer enthält, zwischen dem Substrat (a) und der Aufzeichnungsschicht (b) angeordnet ist, wobei das Atomverhältnis von Fluor zu Kohlenstoff an der Oberfläche der Unterschicht, die die Aufzeichnungsschicht kontaktiert, 0,9 bis 1,8:1 beträgt, gemessen entsprechend dem ESCA-Verfahren.

5. Optisches Aufzeichnungsmedium nach Anspruch 4, dadurch **gekennzeichnet,** dass die Unterschicht ein bedampfter Film aus Polytetrafluorethylen oder ein plasmapolymerisierter Film aus Hexafluoropropylen oder Tetrafluoroethylen ist.

6. Optisches Aufzeichnungsmedium nach Anspruch 4 oder 5, dadurch **gekennzeichnet,** dass nicht weniger als 18 % der Kohlenstoffatome an der Oberfläche der Unterschicht, die die Aufzeichnungsschicht kontaktiert, in Form von $-CF_3$-Gruppen vorhanden sind und dass von 18 % bis weniger als 40 % der Kohlenstoffatome an der Oberfläche in Form von $>CF_2$-Gruppen vorhanden sind.

7. Optisches Aufzeichnungsmedium nach einem der Ansprüche 1 bis 3, dadurch **gekennzeichnet,** dass eine Unterschicht, die ein Chloro-fluorokohlenstoffpolymer enthält, zwischen dem Substrat (a) und der Aufzeichnungsschicht (b) angeordnet ist, wobei das Atomverhältnis von Fluor zu Kohlenstoff an der Oberfläche der Unterschicht, die die Aufzeichnungsschicht kontaktiert, 0,9 bis 1,4:1 ausmacht und dass die Oberfläche von 5 bis 15 Atom-% Chlor enthält.

8. Verfahren zur Herstellung eines optischen Aufzeichnungsmediums, **gekennzeichnet** durch Durchführen einer reaktiven Bedampfung in einer gasförmigen Mischung aus einem Selenfluoridgas und einem Argongas, während eine Legierung, die Te und Se enthält, als ein Targetmaterial verwendet wird, um so eine Aufzeichnungsschicht auf einem Substrat zu bilden, die, bezogen auf die Zusammensetzung der Schicht, von 35 bis 94,9 Atom-% Te, von 5 bis 25 Atom-% Se und von 0,1 bis 40 Atom-% F enthält.

9. Verfahren nach Anspruch 8, dadurch **gekennzeichnet,** dass eine Te-Se-Legierung, die von 1 bis 30 Atom-% Se enthält, als das Targetmaterial verwendet wird.

10. Verfahren zur Herstellung eines optischen Aufzeichnungsmediums, **gekennzeichnet** durch Durchführen einer reaktiven Bedampfung in einer gasförmigen Mischung aus einem Selenfluoridgas und Argongas, während ein Target aus Te verwendet wird, um so eine Aufzeichnungsschicht auf einem Substrat zu bilden, die, bezogen auf die Zusammensetzung der Schicht, von 35 bis 94,9 Atom-% Te, von 5 bis 25 Atom-% Se und von 0,1 bis 40 Atom-% F enthält.

11. Verfahren nach einem der Ansprüche 8 bis 10, dadurch **gekennzeichnet,** dass der Anteil an Selenfluoridgas in der gasförmigen Mischung von 0,1 bis 50 Vol.% ausmacht.

12. Verfahren nach einem der Ansprüche 8 bis 11, dadurch **gekennzeichnet,** dass die Aufzeichnungsschicht eine niedergeschlagene Schicht enthält, die Te, Se und F umfasst, die bei einer Temperatur von 60 bis 130 °C ausgeglüht sind.

**13.** Verfahren nach Anspruch 12, dadurch **gekennzeichnet,** dass die ausgeglühte niedergeschlagene Schicht eine polykristalline Struktur von Kristallen mit einem Teilchendurchmesser von weniger als 1000 Angström aufweist.

**14.** Verfahren nach Anspruch 12 oder 13, dadurch **gekennzeichnet,** dass das Ausglühen bei einer Temperatur von 60 bis 100°C durchgeführt wird.

**15.** Verfahren nach einem der Ansprüche 12 bis 14, dadurch **gekennzeichnet,** dass der Fluorgehalt in der ausgeglühten niedergeschlagenen Schicht von 0,1 bis 30 Atom-% ausmacht.

**16.** Verfahren nach einem der Ansprüche 8 bis 15, dadurch **gekennzeichnet,** dass eine Unterschicht, die ein Fluorkohlenstoffpolymer enthält, zwischen der Aufzeichnungsschicht, die Te, Se und F enthält, und dem Substrat angeordnet wird.

**17.** Verfahren nach Anspruch 16, dadurch **gekennzeichnet,** dass die Unterschicht auf dem Substrat durch eine Plasmapolymerisation eines Fluorkohlenstoffes oder durch Bedampfen von einem Polyfluorkohlenstoff gebildet wird.

**18.** Optisches Aufzeichnungsmedium, auf dem eine Information aufgezeichnet ist, wobei das Medium ein Medium nach einem der Ansprüche 1 bis 7 ist oder durch ein Verfahren nach einem der Ansprüche 8 bis 17 hergestellt ist.

# Fig.1

# Fig.2

# Fig.3

# Fig.4

# Fig.5